# EUROPEAN PATENT APPLICATION

(11) **EP 3 339 519 A1**
(43) Date of publication of application: **27.06.2018**
(21) Application number: 17209522.6
(22) Date of filing: 21.12.2017
(51) Int. Cl.: E03D 5/012, E03D 11/10

(54) **WATER CONSERVING TOILET**

(30) Priority: 23.12.2016 GB 201622205
(71) Applicant: Straight Flush Limited, Edinburgh EH9 1EF (GB)
(72) Inventor: Dietrich, Richard, Edinburgh EH9 1EF (GB); Rampen, William Hugh Salvin, Edinburgh EH10 5AN (GB)
(74) Representative: Hindles Limited

(57) **Abstract**

A toilet comprises a toilet bowl, a passage which extends from the base of the toilet bowl to a drain outlet, a gate, an overflow port, and a flush mechanism comprising a valve operable to regulate a flow of water into the toilet bowl. The gate has an open position which allows water within the toilet bowl to flow out of the drain outlet by way of the passage and a closed position in which the gate retains a continuous body of water within the toilet bowl and a portion of the passage up to a fill level. When the gate is in the closed position, water from the continuous body of water which is above the fill level flows through the overflow port. The flush mechanism is operable to close the valve responsive to water overflow through said overflow port.

## Description

### Field of the invention

The present invention relates to the field of water conserving toilets.

### Background to the invention

At the present time, one third or more of the water consumed by many households is used to flush conventional toilets, which have a cistern and S-shaped water trap. In conventional toilets, only a small fraction of the flush water is required to cleanse the toilet bowl and the majority of the flush water is employed to provide hydraulic energy sufficient to impart kinetic energy to the water already present in the toilet bowl and to carry solids through the S-shaped water trap.

Many innovations have been proposed to control the amount of flush water dispensed by a cistern. However, the kinetic energy required to carry solids through an S-shaped water trap limits the extent to which it is possible to conserve water in this way. It is known to provide a toilet, such as a chemical toilet, in which the S-shaped water trap is dispensed with and an aperture with a simple flap is provided at the base of the toilet bowl to provide a passage for solids to be evacuated vertically downwards from the base of the bowl, avoiding the requirement for a high volume of flush water to be provided to force solids through an S-shaped trap. However, unless the flap is gas tight, gas will leak from the drain outlet to the surrounding atmosphere.

It is difficult to provide a reliable gas tight seal around a moveable flap, particularly as the flap may be soiled in use, and particularly where it is desirable to retain a body of water within the toilet bowl prior to flushing. Furthermore, toilets of this type could not be fitted into the toilet fixture which is currently typical in the UK, in which the drain outlet mates with a pipe, the interior base of which is below the base of the toilet bowl, extending backwards from the toilet, above floor level.

Improved toilet designs have been proposed which include a simple flap provided within a passage which extends horizontally rearwards from the toilet bowl, the flap not completely sealing the entire cross section of the passage, in combination with a baffle configured to extend below a water fill level within the toilet between the flap and the toilet bowl, to thereby form a trap to prevent unpleasant gases escaping from the drain outlet. However, the known flush mechanisms used in such toilets are slow to react to changing water levels within the toilet bowl, thereby leading to a waste of clean water which escapes past the flap during refilling of the toilet after flushing. Additionally, the known flap control mechanisms in such toilets typically allow leakage of water from the passage, leading to damage to toilet fittings, presenting a hazard to health and again allowing unpleasant odours to escape from the toilet. Accordingly, such toilets are not currently popular.

The present invention aims to provide an improved water conserving toilet, which requires less energy to flush than conventional toilets, which resists the passage of gas from the drain outlet to the surrounding atmosphere, and which wastes less clean water than both conventional toilets and known water-conserving toilets. Some embodiments of the invention employ a mechanical flap actuation mechanism which does not require an electricity supply and which does not present a water leakage risk. Some embodiments of the invention provide an improved flush control mechanism which reduces water wastage.

### Summary of the invention

Within this specification and the appended claims, references to directions, such as 'horizontal', 'downwards', etc., refer to the equivalent direction in an assembled and fitted toilet. Words such as 'rearwards' and 'behind' refer to the direction opposite to the direction in which a user of an assembled and fitted toilet would face while sitting on the toilet. Words such as 'downstream' and 'upstream' are defined with reference to the direction in which water (or a mixture of water and liquid and/or solid waste matter) typically flows through an assembled and fitted toilet from a toilet bowl towards a drain outlet during flushing.

Additionally, within this specification and the appended claims, it will be understood that the term 'water' may refer to a liquid comprising substantially water and does not necessarily refer to pure water only. For example, 'water' may comprise one or more water impurities, one or more other liquids (e.g. one or more waste liquids), one or more particles or portions of solid matter (e.g. one or more particles or portions of solid waste matter), and/or one or more toilet cleaning products (e.g. bleach, disinfectants, toilet cleaners). However, the term 'water' may in some cases refer to clean and/or pure water. For example, a flow of water into a toilet bowl during flushing is typically a flow of clean water.

A first aspect of the invention provides a toilet comprising a toilet bowl, a passage which extends from the base of the toilet bowl to a drain outlet, a gate, an overflow port, and a flush mechanism comprising a valve operable to regulate a flow of water into the toilet bowl, the gate having an open position which allows water within the toilet bowl to flow out of the drain outlet by way of the passage and a closed position in which the gate retains a continuous body of water within the toilet bowl and a portion of the passage up to a fill level, wherein, when the gate is in the closed position, water from the continuous body of water which is above the fill level flows through the overflow port, the flush mechanism being operable to close the valve responsive to water overflow through said overflow port.

As the passage extends from the base of the toilet bowl and the gate allows water within the toilet bowl to flow out of the drain outlet when the gate is open, there is no need for the substantial volume of flush water which functions to carry solids within the toilet bowl through the S-shaped water trap of a conventional toilet during flushing.

After the toilet has been flushed, the gate is typically moved from the open position to the closed position and water from the flow of water (regulated by the valve of the flush mechanism) typically flows into the toilet bowl. As the flush mechanism is operable to close the valve response to water overflow through the overflow port, the flow of water into the toilet bowl is stopped when the toilet bowl (and the portion of the passage) has been filled to the fill level. Water wastage, either through unnecessary overfilling of the toilet bowl and the portion of the passage, or through overspill of water from the toilet bowl and the portion of the passage past the gate into the passage behind (i.e. downstream of) the gate, is therefore further reduced. Accordingly, the volume of clean water used when refilling the toilet is reduced in comparison to a conventional toilet.

It may be that (a portion of) the gate defines at least a portion of the overflow port. It may be that (a portion of) the gate comprises said at least a portion of the overflow port.

It may be that (a portion of) the gate defines the entire overflow port. It may be that (a portion of) the gate comprises said entire overflow port.

It may be that the gate comprises a unitary flexible component. It may be that the gate is substantially formed by said unitary flexible component. It may be that the gate consists entirely of said unitary flexible component. Accordingly, it may be that (a portion of) said unitary flexible component defines said at least a portion of the overflow port.

It may be that said unitary flexible component comprises an integral piece of elastomeric material. It may be that said unitary flexible component is (e.g. consists entirely of) an integrally formed piece of elastomeric material.

It may be that the toilet is modular. For example, it may be that the toilet is assembled from a passage portion (comprising a substantial portion of the passage), a gate portion (comprising the gate) and a toilet bowl portion (comprising the toilet bowl and the portion of the passage which retains the continuous body of water up to the fill level when the gate is in the closed position), the gate portion being provided between (e.g. sandwiched between) abutting ends of the passage portion and the toilet bowl portion. It may be that the overflow port is provided in the passage portion adjacent to said abutting end. In such an embodiment, it is preferable that the gate portion (i.e. the gate) defines (e.g. comprises) at least a portion of the overflow port such that said overflow port is brought into fluid communication with the continuous body of water which is retained within the toilet bowl and the portion of the passage by the gate.

The overflow port typically defines the fill level. For example, it may be that the location of the overflow port defines the fill level. It may be that the height at which the overflow port is provided defines the fill level. It may be that the overflow port is located on a (interior) wall of the toilet and that the height at which the overflow port is provided on said (interior) wall defines the fill level.

The overflow port is typically provided within the passage. It may be that the overflow port is provided on an (interior) wall of the passage. It may be that the height at which the overflow port is provided on said (interior) wall defines the fill level.

It may be that an overflow channel extends from the overflow port such that, when the gate is in the closed position, water from the continuous body of water which is above the fill level flows through the overflow port and into (and through) the overflow channel. It may be that the overflow channel slopes away from the overflow port such that water flowing into the overflow channel from the overflow port quickly flows away from said overflow port (under gravity).

The flush mechanism is typically operable to close the valve responsive to detection of water overflow through said overflow port. It may be that the flush mechanism is operable to close the valve responsive to (detection of) water overflow through the overflow channel. For example, it may be that a water sensor is provided within the overflow channel. Said water sensor may comprise a movement sensor (e.g. a water flow sensor).

It may be that the overflow channel extends from the overflow port to an overflow chamber such that, when the gate is in the closed position, water from the continuous body of water which is above the fill level flows (sequentially) through the overflow port, into and through the overflow channel, and into the overflow chamber. It may be that the overflow channel slopes away from the overflow port towards the overflow chamber such that water flowing into the overflow channel from the overflow port quickly flows away from said overflow port and into the overflow chamber.

It may be that the flush mechanism is operable to close the valve responsive to (detection of) a change, for example an increase, in the level of water within the overflow chamber.

It may be that the flush mechanism is operable to close the valve responsive to (detection of) the level of water within the overflow chamber exceeding a threshold. For example, it may be that the flush mechanism is operable to close the valve responsive to (detection of) the level of water within the overflow chamber exceeding a threshold height (or depth).

Accordingly, it may be that the toilet further comprises a level sensor operable to detect the level of water within the overflow chamber. Said level sensor may comprise a float provided within the overflow chamber. The float is typically buoyant in water. The float is typically smaller than the overflow chamber (i.e. the float typically has a smaller volume than the overflow chamber). That is to say, the float does not typically fill the entire overflow chamber. The float is therefore typically free to move (vertically) upwards or downwards within the overflow chamber responsive to a change in water level (e.g. water volume) within the overflow chamber. A gap is typically provided between one or more ((substantially) vertical) walls of the float and one or more adjacent (interior) ((substantially) vertical) walls of the overflow chamber such that it is not necessary to overcome (substantial) friction forces (including static friction, i.e. stiction, forces) in order for the float to move (vertically) in height responsive to a change in water level within the overflow chamber. The level sensor comprising a float therefore typically responds quickly to changes in water level.

It may be that the flush mechanism further comprises a lever arm having opposite first and second ends with a pivot therebetween. The first end of the lever arm is typically coupled to the float within the overflow chamber and the second end of the lever arm is typically coupled to the valve operable to regulate the flow of water into the toilet bowl. Since the height of the float is dependent on the water level within the float chamber, as the water level rises, the float also rises, thereby causing the lever arm to pivot about the pivot such that the first end rises (in height) and the second end lowers (in height), closing the valve and restricting the flow of water into the toilet bowl. Similarly, as the water level within the overflow chamber falls, the float falls, thereby causing the lever arm to pivot about the pivot in an opposite sense such that the first end lowers (in height) and the second end rises (in height), opening the valve and allowing the flow of water to flow into the toilet bowl.

It may be that the flush mechanism comprises a manually operable flush control operable to cause movement of the gate from the closed position to the open position. The manually operable flush control is typically coupled to the gate. The manually operable flush control may be mechanically, hydraulically and/or electronically coupled to the gate. For example, a mechanical linkage may be provided between the manually operable flush control and the gate.

Preferably, the flush mechanism is operable to cause the gate to move from the closed position to the open position for a first period of time following operation of the manually operable flush control and then to cause (e.g. allow) the gate to move from the open position to the closed position. Preferably also, the flush mechanism is operable to cause water to flow into the toilet bowl for a second period of time, said second period of time being longer than said first period of time. The length of the second period of time may be dependent on detection of water overflow through the overflow port.

The manually operable flush control may comprise a (manually operable) button or handle. The manually operable flush control may comprise biasing means for biasing the (manually operable) button or handle towards a first position. The biasing means may comprise a spring. The (manually operable) button or handle is typically movable from the first position to a second position by (manual) depression of said button or handle (against the biasing means). (Manual) depression of the button or handle from the first position to the second position typically constitutes (manual) operation (i.e. activation) of the manually operable flush control.

It may be that activation of said manually operable flush control also causes displacement of water out of the overflow chamber. For example, activation of said manually operable flush control may cause displacement of water out of the overflow chamber through the overflow channel towards (and optionally into) the passage. Alternatively, activation of said manually operable flush control may cause displacement of water out of the overflow chamber through a secondary displacement port.

It may be that said manually operable flush control is coupled to the float by way of float depression means. It may be that depression of the float by said float depression means on activation of said manually operable flush control causes said displacement of water from the overflow chamber (e.g. through the overflow channel into the passage). The float depression means may comprise a rod, a first end of said rod being coupled to the float and a second end of said rod being couple to the manually operable flush control.

The drain outlet is typically provided behind the toilet below the base of the toilet bowl and above a floor contacting base of the toilet. The drain outlet may comprise a section of pipe facing generally rearwards from the toilet. Thus, the toilet can be fitted to the toilet fitments which are in common use in the UK, and some other territories, in which a soil pipe is provided which extends from behind the toilet, below the toilet bowl and above floor level. However, the drain outlet may be provided in a different configuration for use with different toilet fittings appropriate to the market where the toilet is to be sold.

It may be that the toilet further comprises a divider arranged to close off the passage above the fill level and to extend below the fill level at a location intermediate the toilet bowl and a water line where the surface of the continuous body of water contacts the gate, to form a water trap in use when the gate is in the closed position and water is retained up to the fill level. The provision of said divider to form a water trap prevents unpleasantly smelling gas from diffusing from the drain outlet to the toilet bowl in the gas phase. The toilet is typically formed and arranged such that there is no other path for gas from the drain outlet to diffuse into the surrounding atmosphere in the gas phase.

Typically, the passage comprises a first passage region extending under the divider and a second passage region extending from the divider towards the drain outlet, wherein the ceiling of the second passage region is higher than the fill level so that there is an air space above the body of water in the second passage region, extending up to the divider, when the gate is closed and the toilet is filled with water up to the fill level.

The gate may contact the divider on the side of the divider towards the drain outlet. In this case, the gate preferably contacts the divider below the fill level and extends above the fill level on the side of the divider towards the drain outlet such that there is a water-filled gap between the divider and the water line where the surface of the continuous body of water contacts the gate.

A benefit of this arrangement is that the gate need not form a gas tight seal between the drain outlet and the toilet bowl. It may be that the flush mechanism is operable to close the valve responsive to (detection of) the level of water within the overflow chamber exceeding a threshold. This is advantageous as it is difficult to form a gas tight seal which will be reliable in the long term, particularly if the gate may be fouled in use.

Typically, the gate extends above the fill level but below the ceiling of the second passage region when the gate is in the closed position. Accordingly, a continuous air space may extend from the drain outlet to the divider, above the retained water, when the gate is closed and the toilet bowl is filled up to the fill level.

The divider is preferably fixed. For example, the divider may be integral to the toilet bowl. Typically, the toilet bowl and divider, and optionally the passage, or a portion thereof, are an integrated (preferably monolithic) unit formed, for example, from a plastics material or preferably a ceramic. The divider may be demountable to facilitate replacement.

The surface of the divider which faces the toilet bowl typically forms part of the surface of the toilet bowl, although the divider could be recessed from the toilet bowl, within the passage. Typically, the vertical distance between the base of the divider and the base of the passage, underneath the divider, is at least 5 cm to facilitate the outflow of solid (waste) matter.

The base of the divider is typically rounded to facilitate cleaning and the flow of water underneath the divider.

The toilet bowl has a rim. A water conduit may be provided around the periphery of the toilet bowl, near the rim, the water conduit comprising a plurality of apertures through which water is directed down the sides of the toilet bowl to rinse the sides of the toilet bowl for a period of time and refill the toilet bowl up to the fill level when the toilet is flushed. A removable conduit may be provided in which case the toilet comprises a water outlet for supplying flush water to a removable conduit, and the toilet may be provided as part of a kit further comprising one or more removable, generally ring-shaped (e.g. partially ring-shaped), water conduits having a plurality of apertures around the (partial) ring.

A second aspect of the invention provides a kit of parts for assembling the toilet according to any embodiment of the first aspect of the invention, the kit of parts comprising a toilet bowl module, an adaptor pipe module and a gate. The toilet bowl module typically comprises a toilet bowl and a passage which extends from the base of the toilet bowl to an outlet located to the rear of the toilet bowl module. The adaptor pipe module typically comprises a passage extending between a front inlet and a rear outlet, the adaptor pipe module having the gate attached thereto or having a fitting for receiving the gate. The front inlet of the adaptor pipe module and the outlet of the toilet bowl module are typically adapted to join in an abutting relationship, either or both of the front inlet of the adaptor pipe module and the outlet of the toilet bowl module comprising a recess for receiving and sealedly retaining the gate. The adaptor pipe module typically further comprises an overflow channel extending from an overflow port in an interior wall of the passage which extended between the front inlet and the rear outlet.

It may be that the overflow channel extends between the overflow port and an overflow chamber provided in the adaptor pipe module.

It may be that the gate comprises a flap and flexible sealing members extending from either side of the flap, formed as a piece of elastomeric material arranged to cooperate with the recess.

It may be that the toilet bowl module further comprises a divider arranged to close off an upper portion of the passage between the base of the toilet bowl and the outlet, and an aperture extending rearwards from the toilet bowl under the divider into the passage, the passage having an interior surface which extends higher than the uppermost point of the aperture.

A third aspect of the invention provides a toilet comprising a toilet bowl, a passage which extends from the base of the toilet bowl to a drain outlet, a gate, and a gate actuator, the gate having an open position which allows water within the toilet bowl to flow downstream towards the drain outlet by way of the passage and a closed position in which the gate retains a continuous body of water upstream of the gate within the toilet bowl and a portion of the passage up to a fill level, wherein the gate actuator is operable to move the gate between the open and closed positions by rotation of a crank rotatably mounted on an interior wall of the passage above a standing water level in the passage downstream of the gate.

As the crank is rotatably mounted on the interior wall of the passage above the standing water level downstream of the gate, water retained within the passage downstream of the gate up to the standing water level is not able to leak from the crank mounting point, as may occur if the crank were mounted at or below the standing water level. One consequence of this inventive placement of the crank mounting point above the standing water level is that there is less likely to be damage caused by leaking water (such as rusting of metal components or perishing of plastics components), meaning that the toilet will typically last longer and require fewer replacement parts. Another consequence is improved cleanliness, as waste matter (including liquid waste matter and/or solid waste matter particles) should not be able to escape from the passage, through the crank mounting point, and into the rest of the toilet assembly and/or into the surrounding atmosphere. Unpleasant smells caused by escaping waste matter are also significantly reduced. A sealed crank mount also reduced unpleasant smells escaping from within the passage of the toilet into the surrounding atmosphere.

Additionally, the inventors have found that a mechanical gate actuator comprising a crank is simpler to construct and, in practice, more reliable and effective than alternative gate actuators such as hydraulic or electronic actuators. Hydraulic actuators in particular suffer from problems due to friction (including static friction (i.e. stiction)) between pistons and piston cylinders and due to the low water pressures typically present within a toilet, which slow down the gate actuator response speed, permitting water to leak due to its low visocity. The claimed gate actuator comprising a crank reduces the area of contacting surfaces which can lead to frictional losses and/or stiction which must be overcome in order for stationary components to begin moving, and the actuator operates independent of the water pressure.

It may be that the gate comprises a flap. The flap may have a hinged base. The hinged base may be attached to an (interior) base of the passage. The hinged base may comprise a jointed or flexible hinge. For example, the flap may include a flexible portion which functions as a hinge, flexibly attaching the flap to the (interior) base of the passage. It may be that, when the gate is in the open position, the flap extends horizontally, or horizontally downwards, from the hinged base, downstream towards the drain outlet, to allow water to flow from the toilet bowl through the passage over the flap to the drain outlet. Typically, when the gate is in the open position, the flap extends horizontally downwards from the hinged base towards the drain outlet so as to provide a continuous path for water to flow from the toilet bowl to the drain outlet at a mean angle of between 5° and 20° below the horizontal.

It may be that the crank is coupled to the flap. It may be that the crank is coupled to one or more flap supporting members coupled to the flap. The one or more flap supporting members may be attached to the flap. Alternatively, it may be that the one or more flap supporting members are integrally formed with the flap. It may be that the flap is formed from one or more flexible (e.g. elastomeric) materials and the one or more flap supporting members support the flap in the closed position, wherein the flap extends substantially (vertically) upwards in said closed position.

It may be that the crank is coupled to the flap and/or the flap supporting member by way of an intermediate connector, for example an intermediate connecting rod. For example, it may be that the crank is hingedly connected to a first end of the intermediate connector (e.g. connecting rod) and that a second end of the intermediate connector (e.g. connecting rod) is hingedly connected to the flap or the flap supporting member.

It may be that each flap supporting member is attached to the flap by way of a push-fit connection. For example, it may be that a surface of the flap comprises one or more (elastomeric) protrusions and a surface of the flap supporting member comprises one or more apertures, each protrusion being (releasably) retained within a corresponding aperture. Each of the one or more protrusions is typically sized for an interference fit with each corresponding aperture.

It may be that each of the one or more flap supporting members comprises a flap stiffening member. It may be that each of the one or more flap supporting members is a flap stiffening member. It may be that said flap stiffening member is coupled to the flap. It may be that said flap stiffing member is attached to the flap. Alternatively, it may be that said flap stiffening member is integrally formed with the flap. It may be that the flap is formed from one or more flexible (e.g. elastomeric) materials and said flap stiffening member stiffens the flap (i.e. provides rigidity to the flap), particularly when the flap is in the closed position in which the flap typically extends substantially (vertically) upwards.

It may be that the crank is rotatably mounted on the (interior) wall of the passage (downstream of the gate) above a water flow level in the passage downstream of the gate. The water flow level downstream of the gate is typically defined when the gate is open (such that water is able to flow from the toilet bowl through the passage towards the drain outlet).

The water flow level downstream of the gate typically varies during the time period between opening of the gate (to initiate flushing of the toilet) and closing of the gate (to allow the toilet bowl to be refilled with clean water). The water flow level typically reaches a maximum water flow level downstream of the gate shortly after the gate has been moved from the closed position to the open position and when the toilet bowl and the portion of the passage have been filled to the fill level with water. The maximum water flow level is typically dependent on (e.g. typically defined by) the configuration of the gate, the (interior) dimensions of the passage and the height of the water fill level when the gate is in the closed position. Accordingly, it may be that the crank is rotatably mounted on the interior wall of the passage (downstream of the gate) above the maximum water flow level in the passage downstream of the gate.

The water flow level (and thus also the maximum water flow level) is typically (vertically) higher than the standing water level in the passage downstream of the gate. The water flow level (and thus also the maximum water flow level), when the gate is in the open position, is typically equal or lower in height than the fill level of water upstream of the gate when the gate is in the closed position.

It may be that the (maximum) water flow level varies (in height) along a length of the passage downstream of the gate when the gate is in the open position. For example, it may be that the (maximum) water flow level decreases (in height) with increasing downstream distance away from the gate towards the drain outlet when the gate is in the open position.

It may be that the (e.g. interior of the) passage narrows downstream of the gate. It may be that the (e.g. interior of the) passage is narrower downstream of the gate than the (e.g. interior of the) passage upstream of the gate. For example, it may be that an interior breadth of a downstream portion of the passage, closer to the drain outlet, is less than the interior breadth of an upstream portion of the passage, closer to the toilet bowl. Because the (e.g. interior of the) passage narrows downstream of the gate, the depth of water flowing from the toilet bowl to the drain (i.e. when the gate is opened) typically increases as it flows downstream, thereby increasing the buoyancy of, and assisting the flotation of, solid waste matter as it travels with the water towards the drain outlet. Solid waste matter is therefore less likely to drag along or adhere to the (e.g. base of the) passage when the toilet is flushed.

It may be that a portion of the (e.g. interior of the) passage narrows downstream of the gate. It may be that the portion of the (e.g. interior of the) passage is narrower downstream of the gate than a portion of the (e.g. interior of the) passage upstream of the gate. For example, it may be that an interior breadth of a portion of the downstream portion of the passage, closer to the drain outlet, is less than the interior breadth of a portion of the upstream portion of the passage, closer to the toilet bowl.

It may be that the portion of the (e.g. interior of the) passage which narrows downstream of the gate is a (i.e. vertically) lower portion of the (e.g. interior of the) passage. For example, it may be that lower portions of the interior walls of the passage are closer together downstream of the gate (than they are upstream of the gate).

It may be that the (interior) shape of the passage is different downstream of the gate (from the (interior) shape of the passage upstream of the gate). It may be that the (interior of the) passage upstream of the gate is substantially cylindrical (i.e. substantially circular in cross section in a plane substantially perpendicular to a longitudinal axis of the passage), and the (interior) of the passage downstream of the gate is substantially non-cylindrical (i.e. non-circular in cross section perpendicular to the longitudinal axis of the passage). The (interior) of the passage downstream of the gate may be substantially U-shaped. The (interior) of the passage downstream of the gate may be substantially T-shaped. The (interior) of the passage downstream of the gate may be shaped substantially as a stadium in cross section perpendicular to the longitudinal axis of the passage (i.e. the cross sectional shape comprises a rectangular portion and two semicircular portions, one semicircular portion provided at a first end of the rectangular portion and the other semicircular portion provided at a second end of the rectangular portion opposite the first end).

It may be that the crank is rotatably mounted on the interior wall of the passage (downstream of the gate) at a height above an (interior) base of the passage which is greater than 30%, or more typically greater than 40%, or even more typically greater than 50% of a total (interior) height of the passage above said (interior) base. The (interior) height of the passage at a given position along a length of the passage is typically defined as the (shortest) vertical distance between opposing points on the (interior) base of the passage and the (interior) ceiling of the passage at that position.

The crank is typically rotatable about an axis which extends from the interior wall of the passage (downstream of the gate) above the standing water level (or above the (maximum) water flow level).

It may be that the crank is rotatable about a crank shaft which extends from the interior wall of the passage (downstream of the gate) above the standing water level (or above the (maximum) water flow level). It may be that the crank shaft extends into the interior wall of the passage. For example, it may be that the crank shaft extends through the interior wall of the passage.

The crank shaft may extend across (the interior of) the passage. For example, said interior wall of the passage may be a first interior wall of the passage, and the crank shaft may extend from said first interior wall of the passage towards a second interior wall of the passage opposite said first interior wall. It may be that the crank shaft extends entirely between the first and second interior walls of the passage. Alternatively, the crank shaft may extend along one or more portions of the distance between the first and second walls of the passage.

It may be that the crank shaft comprises first and second crank shaft portions, the first crank shaft portion extending from a first end of the crank and the second crank shaft portion extending a second end of the crank. It may be that the first crank shaft portion extends into (e.g. through) the first interior wall and that the second crank shaft portion extends into (e.g. through) the second interior wall.

It may be that an end of the crank shaft or an end of one of the first and second crank shaft portions is rotatably retained within a recess of the second interior wall of the passage, said recess functioning as a passive pivot point.

It may be that a (substantial) portion of (a length of) the crank conforms to a (interior) shape of the passage. It may be that the (interior) shape of the passage is defined (in part) by one or more interior walls of the passage or one or more portions thereof. It may be that said (interior) shape of the passage is also defined (in part) by the interior base and/or interior ceiling of the passage, or one or more portions thereof. For example, it may be that the (substantial) portion of (the length of) the crank is U-shaped so as to conform to (substantially) curved interior walls of the passage. It may be that the (substantial) portion of (the length of) the crank is (substantially) rectilinear in shape so as to conform to (substantially) flat interior walls. Such (substantially) flat interior walls may be arranged at right angles to one another.

It may be that a (substantial) portion of (the length of) the crank is covered by the flap when the flap is in the open position. For example, it may be that a (substantial) portion of (the length of) the crank is concealed by the flap when the flap is in the open position. It may be that, when the gate is in the open position, the (substantial) portion of (the length of) the crank lies along the interior base of the passage and the flap extends rearwards downstream over the (substantial) portion of (the length of) the crank. It may be that the interior base of the passage comprises a crank recess for housing said (substantial) portion of (the length of) the crank beneath the flap when the gate is in the open position.

The gate actuator is typically a mechanical actuator operably linked to the manually operable flush control. For example, it may be that the mechanical gate actuator is operably linked to the manually operable flush control by way of a mechanical linkage.

Alternatively, it may be that the gate actuator is a hydraulic actuator operably linked to the manually operable flush control by way of a hydraulic line. For example, a mechanical linkage may be provided between the manually operable flush control and the gate actuator. Said mechanical linkage may comprise a crank mechanism operably linking the gate actuator to the manually operable flush control by way of a flush rod.

The gate may be biased towards either the open position or the closed position. For example, the gate actuator may comprise biasing means (such as a spring) for biasing the gate towards either of the open or closed positions. It may be that the gate is biased towards the closed position, and that moving the gate from the closed position towards the opening position comprises compression (or extension) of a spring.

It may be that the flap further comprises flexible sealing members extending from the flap to adjacent walls of the passage. Said flexible sealing member typically flex in use as the flap moves between the open and closed positions. This arrangement has the advantage that there need not be a sliding contact between the side walls of the flap and the walls of the passage. The flexible sealing members are typically in sealing engagement with the walls of the passage at an orientation which is intermediate the orientation which the flap adopts in the open position and the orientation which the flap adopts in the closed position. For example, the join between the flexible sealing members and the interior of the passage may extend from the hinged based of the flap at an angle of between 30° and 75°, and preferably around 45°, from the horizontal, towards the drain outlet.

The flexible sealing members may be integral with the flap. The flexible sealing members may be elastic. The flexible sealing members may comprise folds. The flap and flexible sealing members may be formed as an integral member comprising one or more folds. It may be that the flap and flexible sealing members are formed as an integral piece of elastomeric material, such as a folded sheet of elastomeric material. Preferably, the base and sides of the gate are integral with, or extend into, the wall of the passage.

However, alternative gates may be employed. For example, the gate may comprise a flap having a generally vertical hinge, or a wall which extends above the fill level in the closed position but does not extend above the base of the passage in the open position, to allow water to flow from the toilet bowl through the passage to the drain outlet.

It may be that the gate is demountable. For example, it may be that the toilet comprises a bowl portion and an adaptor pipe portion, wherein the bowl portion comprises the toilet bowl, wherein the passage is formed at least in part by the adaptor pipe portion and is typically also formed at least in part by a passage section of the bowl portion, the adaptor pipe portion and the passage section of the bowl portion being attachable in an abutting relationship, the gate being demountably retainable between abutting ends of said adaptor pipe portion and passage section of the bowl portion. This typically facilitates repair and/or maintenance of the gate.

A fourth aspect of the invention provides a kit of parts for assembling the toilet according to any embodiments of the third aspect of the invention, the kit of parts comprising a toilet bowl module, an adaptor pipe module and a gate. The toilet bowl module typically comprises a toilet bowl and a passage which extends from the base of the toilet bowl to an outlet located to the rear of the toilet bowl module. The adaptor pipe module typically comprises a passage extending between a front inlet and a rear outlet, the adaptor pipe module having the gate attached thereto or having a fitting for receiving the gate. The front inlet of the adaptor pipe module and the outlet of the toilet bowl module are typically adapted to join in an abutting relationship, either or both of the front inlet of the adaptor pipe module and the outlet of the toilet bowl module comprising a recess for receiving and sealedly retaining the gate. The adaptor pipe module typically further comprises a gate actuator rotatably mounted on an interior wall of the passage rearwards (i.e. downstream) of the gate or rearwards (i.e. downstream) of the fitting for receiving the gate.

It may be that the gate actuator comprises a crank. A (substantial) portion of the length of the crank may conform to an (interior) shape of passage of the adaptor pipe (defined by one or more (interior) walls of said passage or portions thereof). The crank may be rotatably mounted on one or more (interior) walls of the passage at a height about an (interior) base of the passage which is greater than 30%, or more typically greater than 40%, or even more typically greater than 50% of the total height of passage above the (interior) base.

It may be that the gate comprises a flap and flexible sealing members extending from either side of the flap, formed as a piece of elastomeric material arranged to cooperate with the recess.

It may be that the toilet bowl module further comprises a divider arranged to close off an upper portion of the passage between the base of the toilet bowl and the outlet, and an aperture extending rearwards from the toilet bowl under the divider into the passage, the passage having an interior surface which extends higher than the uppermost point of the aperture.

A fifth aspect of the invention provides a toilet comprising a toilet bowl, a passage which extends from the base of the toilet bowl to a drain outlet, a gate, an overflow port, and a flush mechanism comprising a valve operable to regulate a flow of water into the toilet bowl, the gate having an open position which allows water within the toilet bowl to flow out of the drain outlet by way of the passage and a closed position in which the gate retains a continuous body of water within the toilet bowl and a portion of the passage up to a fill level, wherein an interior breadth of a downstream portion of the passage, closer to the drain outlet, is less than the interior breadth of an upstream portion of the passage, closer to the toilet bowl.

Because an interior breadth of a downstream portion of the passage, closer to the drain outlet, is less than the interior breadth of an upstream portion of the passage, closer to the toilet bowl, the depth of water flowing from the toilet bowl to the drain (i.e. when the gate is opened) typically increases as it flows from the upstream portion through the downstream portion, thereby increasing the buoyancy of, and assisting the flotation of, solid waste matter as it travels with the water towards the drain outlet. Solid waste matter is therefore less likely to drag along or adhere to the (e.g. base of the) passage when the toilet is flushed.

It will be understood that the term "interior breadth" of the passage means an interior or internal width of the passage (i.e. a distance measured (typically in a substantially horizontal direction) between opposing interior walls of the passage). It may be that an average interior breadth of the downstream portion of the passage is less than the average interior breadth of the upstream portion of the passage. It may be that a maximum interior breadth of the downstream portion of the passage is less than the maximum interior breadth of the upstream portion of the passage. It may be that the interior breadth of any given portion of the passage is an interior breadth measured at a height of approximately 50% of a total (e.g. interior) height of said portion of the passage (e.g. approximately half way between an (e.g. interior) base of the said portion of the passage and an (e.g. interior) ceiling of said portion of the passage).

It may be that the downstream portion of the passage is located at a downstream end of the passage (e.g. a downstream end of the passage adjacent to or abutting the drain outlet). It may be that the upstream portion of the passage is located at an upstream end of the passage (e.g. an upstream end of the passage adjacent to or abutting the toilet bowl).

It may be that the upstream portion of the passage is a portion of the passage upstream of the gate (e.g. when the gate is in the closed position). It may be that the downstream portion of the passage is a portion of the passage downstream of the gate (e.g. when the gate is in the closed position). It may be that the upstream portion of the passage is a portion of the passage downstream of the gate (e.g. when the gate is in the closed position) and the downstream portion of the passage is a portion of the passage further downstream of the upstream portion of the passage (e.g. towards the drain outlet) (e.g. when the gate is in the closed position).

It may be that the (e.g. interior of the) passage narrows (e.g. continuously) between the upstream portion of the passage and the downstream portion of the passage.

It may be that a cross-sectional area (e.g. in a plane substantially perpendicular to the direction of flow of water from the toilet bowl towards the drain outlet) of (e.g. the interior of) the downstream portion of the passage is less than the cross-sectional area of the upstream portion of the passage. It may be that the cross-sectional area of (e.g. the interior of) the passage varies (e.g. continuously) between the upstream portion of the passage and the downstream portion of the passage.

Optional features of any one aspect of the invention are also, *mutatis mutandis,* optional features of any other aspect of the invention.

### Description of the Drawings

An example embodiment of the present invention will now be illustrated with reference to the following Figures in which:
Figure 1 is a sectional view of a toilet according to the present invention, while filled to a fill level;
Figure 2 is a perspective view of a flap for the toilet of Figure 1;
Figure 3 is a perspective view of a second pipe portion with a gate actuating crank installed for the toilet of Figure 1;
Figure 4 is a perspective of the second pipe portion of Figure 3 with the flap of Figure 2 fitted therein in a lowered position;
Figure 5 is a sectional view of the toilet of Figure 1 with the flap in a lowered position;
Figure 6 is a perspective of the second pipe portion of Figure 3 with the flap of Figure 2 fitted therein in a raised position;
Figure 7 is a sectional view of the toilet of Figure 1 with the flap in a raised position, the toilet bowl filled to the fill level and the passage retaining a standing level of drain water;
Figure 8 is a schematic diagram of a flush control mechanism for the toilet of Figure 1, showing a sectional view of the second pipe portion in fluid communication with an overflow chamber; and
Figure 9 is a cross-section through the second pipe portion downstream of the flap.

### Detailed Description of an Example Embodiment

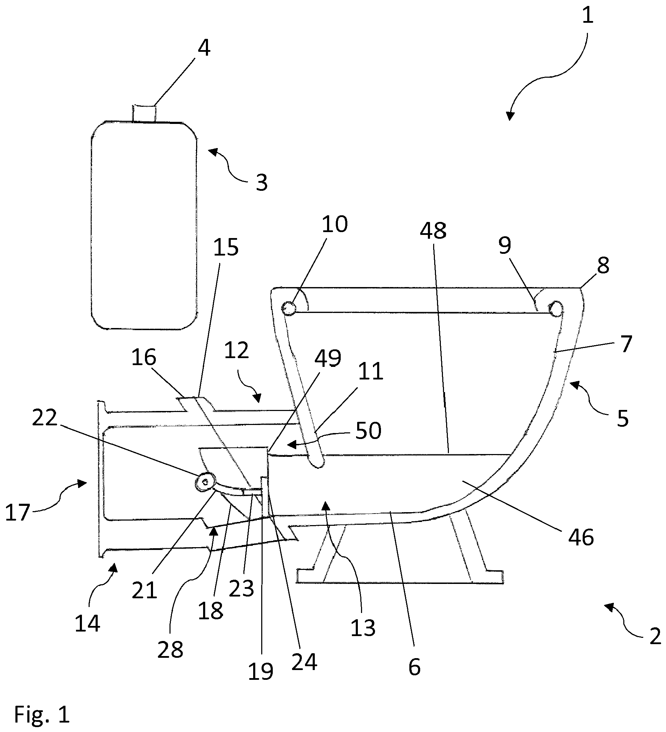

With reference to Figure 1, a toilet 1 comprises a ceramic unit 2 and rear housing 3. Rear housing 3 has a manually operable flush button 4 (functioning as the flush control) mounted thereon, and encloses the majority of a flush control mechanism which is described further below. The ceramic unit is shaped to define a toilet bowl 5 having an interior base 6, interior wall 7 and rim 8 with an overhanging peripheral lip 9. Lip 9 retains a spray ring 10, the spray ring being formed from an injection moulded plastic material and comprising a plurality of apertures (not shown).

The interior wall of the ceramic unit includes a baffle 11 (functioning as the divider) which separates the toilet bowl from a first pipe section 12. An aperture 13 extends under the baffle into the first pipe section to allow passage of water and solids from the toilet bowl into the first pipe section in use. The first pipe section is sealedly attached to a second pipe section 14 by cooperating flange members 15, 16 on the first and second pipe sections, respectively. The cooperating flange members extend rearwards and upwards at an angle of about 45° to the horizontal. The second pipe section extends to a drain outlet 17 and, together with the first pipe section, forms a passage extending from the base of the toilet bowl to the drain outlet.

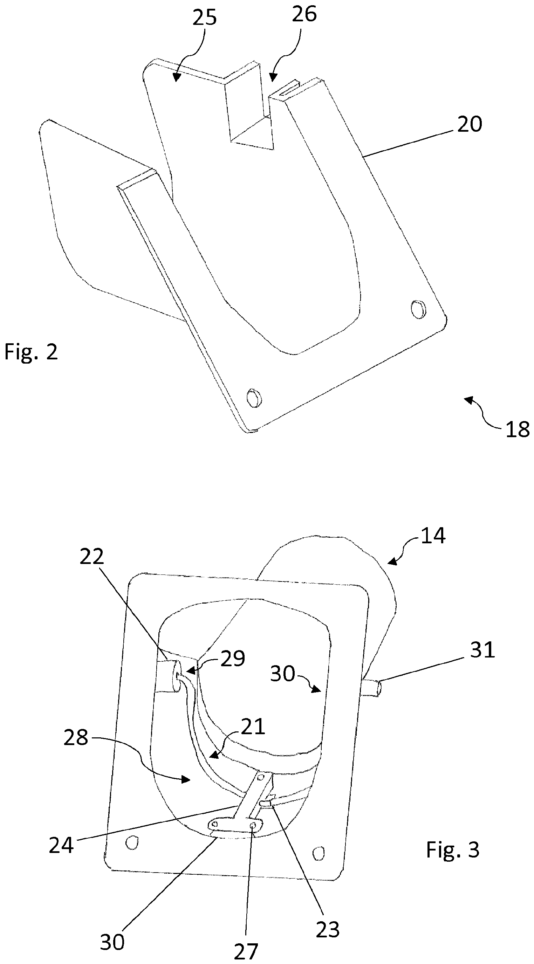

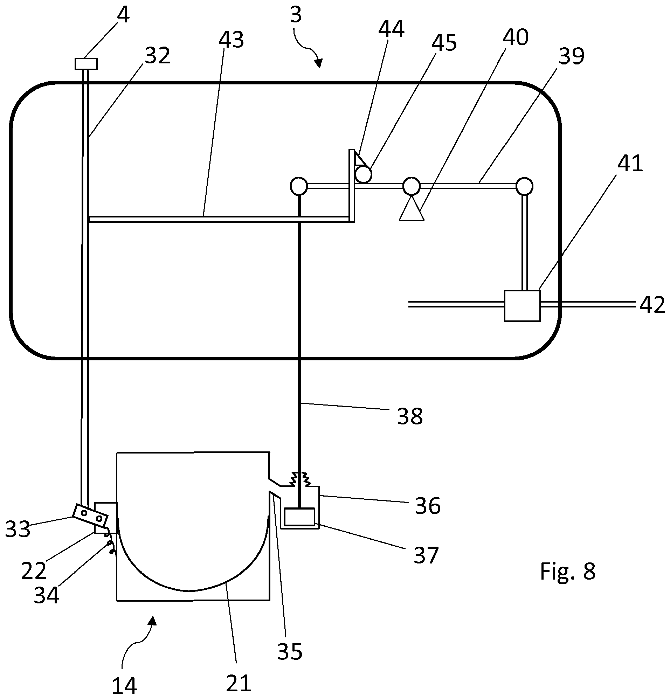

A flap 18 (functioning as the gate) is located within the passage and is hingedly attached to the base of the passage by a hinge 19. The flap 18 is sealedly attached to the passage walls either side of the flap by flexible sealing member 20, illustrated in Figure 2. The flap is deployable from a raised position (functioning as the closed position), in which the flap extends generally vertically, to a lowered position (functioning as the open position), in which the flap extends horizontally rearwards and slightly downwards, by a flap actuating crank 21 (functioning as the gate actuator). The crank extends from a rotatable mount 22 and is coupled to the flap by way of a connecting rod 23 attached to a flap support 24. The crank is biased by a spring (shown in Figure 8) so that, by default, the flap is maintained in the raised position.

With reference to Figure 2, flap 18 is formed from one continuous piece of elastomeric material. A generally U-shaped flap portion 25 extends towards a rear of the flap. Flap portion 25 functions as a gate wall when the flap is deployed in the raised position. The flexible sealing member 20 is provided around a front end of the flap. Adjacent to the flexible sealing member 20, on one side of the U-shaped flap portion 25, is an integrally-formed overflow port 26 which extends laterally out of the flap. Three integrally-formed connecting nodules are provided on an underside of the flap (not shown).

With reference to Figure 3, the flap actuating crank 21 is provided within a recessed portion 28 of the interior passage of the second pipe portion 14. Opposing ends 29, 30 of the crank extend into and through the walls of the second pipe portion 14. Crank end 30 is passively retained, and is freely rotatable, within a recess 31 of the interior wall of the second pipe portion 14. Crank end 29 is fixedly attached to rotatable mount 22 which extends through the interior wall of the second pipe portion 14. Crank 21 is attached to connecting rod 23 by way of a first hinged link, connecting rod 23 also being attached to the flap support 24 by way of a second hinged link. The flap support 24 is attached to the base of the second pipe portion 14 by a hinge 30.

Crank 21 is rotatable by rotation of the rotatable mount to which it is fixedly attached. Rotation of crank 21 about an axis extending between crank ends 29 and 30 drives movement of the flap support 24, by way of connecting rod 23, between a lowered position (in which the flap support 24 is recumbent within recessed portion 28 of pipe portion 14) and a raised position (in which the flap support 24 is rotated out of recessed portion 28).

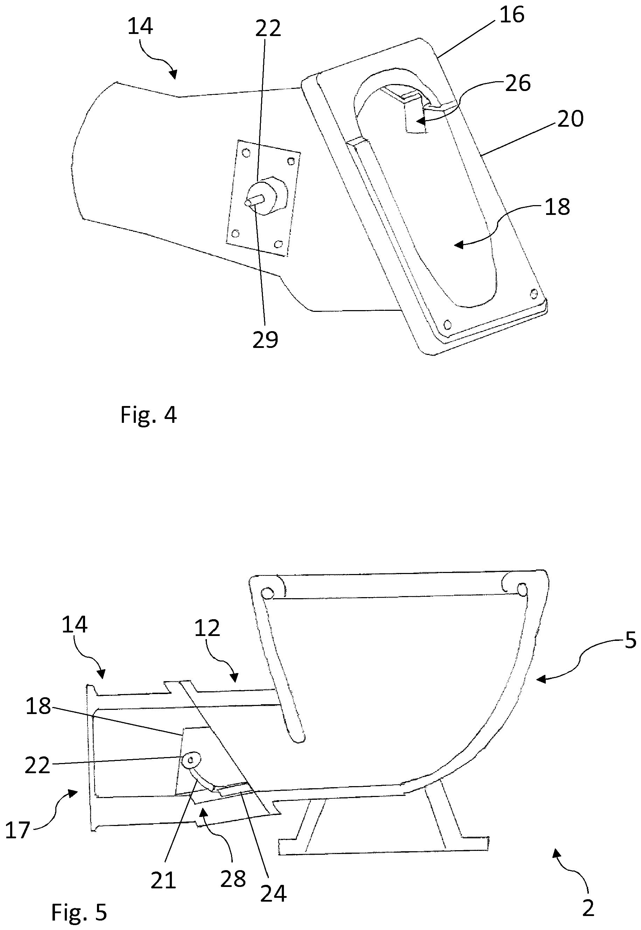

As illustrated in Figures 4 and 5, in use, flap 18 is positioned within the second pipe portion 14 on top of the flap support 24, the connecting rod 23 and a portion of the crank 21, such that sealing member 20 is held flush against flange member 16, typically by corresponding flange member 17 of the second pipe portion. Each of the connecting nodules of the flap forms a push fit connection with corresponding apertures 27 provided on the flap support 24 such that the flap is fixedly attached to the flap support. Accordingly, movement of the flap support 24 due to rotation of the crank 21 drives movement of the flap 18 between the raised and lowered positions.

Figures 4 and 5 show the flap 18 provided in the lowered position in which the flap extends rearwards across the recessed portion 28 of second pipe portion 14, thereby completely covering flap support 24 and the portion of the crank 21 provided within the passage. When the flap is in the lowered position, water in the toilet bowl 5 is free to flow through the passage towards the drain outlet 17.

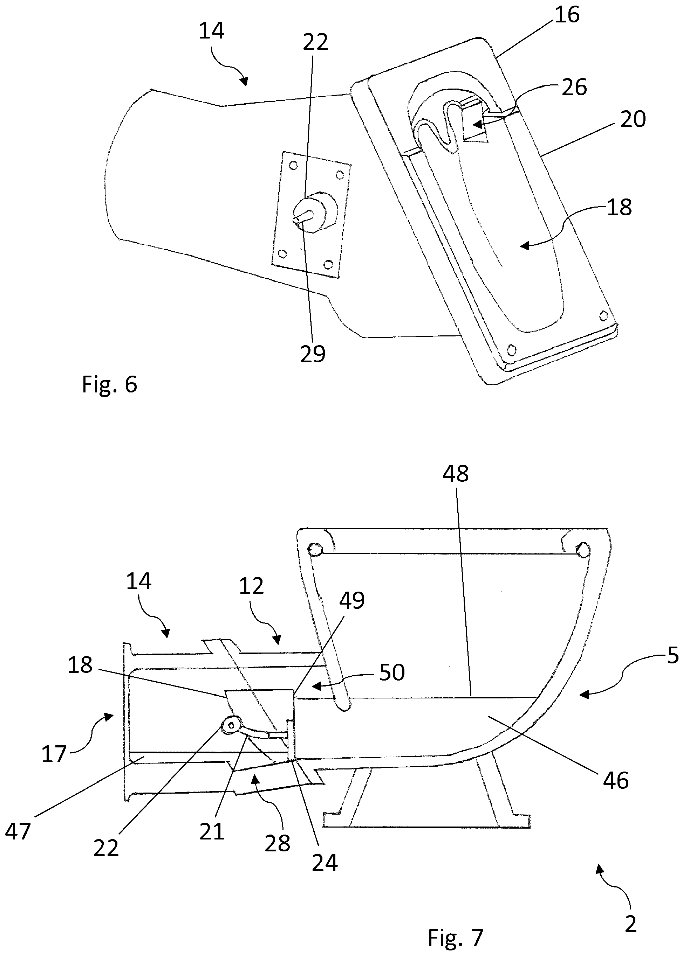

Figures 1, 6 and 7 show the flap 18 provided in the raised position in which the rear portion 25 of the flap is vertically supported by the raised flap support 24 to thereby form a continuous gate wall across the passage. As the flap 18 is formed from elastomeric material, the flap is able to flex as it is raised from the lowered position to the raised position. When the flap is in the raised position, the flap is able to retain a body of water 46 within the toilet bowl 5 and the first pipe portion 12. As shown in Figure 7, a standing body of drain water 47 may also be retained within the second pipe portion 14. Rotatable mount 22 is provided above the standing water level in the second pipe portion 14. Additionally, rotatable mount 22 is provided above a water flow level in second pipe portion 14, said water flow level being the level of water within the second pipe portion 14 shortly after the flap 18 is moved from the raised position to the lowered position, as water flow from the toilet bowl 5 and the first pipe portion 12 into the second pipe portion 14 towards the drain outlet 17. Since the rotatable mount 22 is provided above the standing water level, and above the water flow level, water is not typically able to leak from the passage through said rotatable mount. If the rotatable mount 22 were provided below the water flow level, and particularly below the standing water level, water (and thus also liquid and solid waste matter) would tend to leak through the rotatable mount into the surroundings, causing damage to the toilet, presenting a health hazard, and also exposing the surrounding atmosphere to unpleasant odours.

The ceramic unit, the baffle and the first pipe section (together functioning as the toilet bowl module) are typically formed as a monolithic unit. The second pipe section (functioning as the adaptor pipe module) comprises a first end adapted to be attached to a soil pipe and so functions as the drain outlet 17, and a second end adapted to be attached to the abutting end of the first pipe section. In order to assemble the toilet, the second pipe section is plumbed to a soil pipe. The flap actuator comprising the crank is fitted to the second pipe section. A piece of elastomeric material comprising both the flap and flexible sealing members, and including a number of flexible hinges, is located in a shallow recess of the second end of the second pipe portion. The gate initially stands proud of the recess. The ceramic unit is then fitted to the second pipe section by abutting the second end of the second pipe section and the open end of the first pipe section. The flange members are sealed together, for example with bolts. The edges of the piece of elastomeric material, which extend into the shallow recess, are compressed, forming a seal between the flap and the passage.

Figure 8 illustrates schematically the flush control mechanism, the majority of which is located in the rear housing 3. The flush button 4 is connected via a flush rod 32 to the rotatable mount 22 extending from a first side of the passage wall defined by the second pipe portion 14. The flush rod 32 is coupled to the rotatable crank mount 22 by way of a hinged link 33. The rotatable mount 22 is also coupled to the external wall of the second pipe portion 14 by a coil spring 34 arranged such that the rotatable mount 22 is biased towards a default position in which the flap inside the passage is held in the raised position. Depression of the flush button 4 to depress the flush rod 32 drives rotation of the mount 22 against the biasing spring 34, thereby rotating the crank from the raised position to the lowered position. When the flush button is released, the spring 34 drives rotation of the crank mount back to its default position, thereby rotating the crank from the lowered position back to the raised position. Rotation of the mount back to the default position also pushes the flush rod, and thus the flush button, back up to the starting position ready for the next flush.

Figure 8 also shows that an overflow channel 35 extends from a wall of the passage (opposite the rotatable crank mount) into an overflow chamber 36. The overflow channel is positioned such that the overflow port 26 of the flap extends into said overflow channel. When water is present in the passage upstream of the flap at or above the height of the overflow port, water flows from the passage, through the overflow channel and into the overflow chamber. An overflow chamber water level sensor in the form of a float 37 is provided within the overflow chamber, said float being connected via a rod 38 to the first end of a lever arm 39 having a pivot 40. A second end of the lever arm 39 is mechanically linked to a fill valve 41 which is openable to allow water to flow from the main water supply 42 into the spray ring and out through the apertures located around the spray ring into the toilet bowl 5. The fill valve includes a sealed bore with a ferrous slug therein which, when pulled upwards when the second end of the lever arm is raised, opens a magnetically actuated pilot allowing water to flow from the mains to the spray ring. The first end of the lever arm 39 is therefore in sensing communication with the overflow chamber 36 so that, as the water level in the overflow chamber exceeds a predefined threshold, flow of water into the toilet from the mains is shut off by the second end of the lever arm closing the valve 41.

The flush rod 32 is also mechanically coupled to the lever arm 39 by way of a connecting rod 43 having a toggle hook 44 engaging a spigot 45 of the lever arm 39.

Depression of the flush rod 32 (by depression of the flush button 4) simultaneously allows water to flow into the toilet from the mains (by rotation of the lever arm 39 about pivot 40) and causes displacement of water from the overflow chamber 36 through the overflow channel 35 back into the passage (by depression of the float 37), thus partially emptying the chamber.

The ceramic unit includes a ground engaging base (not shown) which defines the height at which the first pipe section extends above the floor onto which the toilet is fitted. The rear housing is mounted behind and above the ceramic unit with the float mechanically linked to the first end of the lever arm and the rotatable mount connected to the flush rod. The spray ring may, for example, be formed as a silicon rubber moulding having an inlet for receiving water from the fill valve.

Between flushes, the flap adopts the raised position illustrated in Figures 1 and 7, and the toilet bowl remains filled up to a fill level 48 with a continuous body of water 46 which extends from the toilet bowl into the passage, to the flap, up to a water line 49 on the surface of the flap. The fill level 48 is level with a base of the overflow port 26. A gas space 50 above the water line, within the passage, is in gaseous communication with the drain outlet and so will accumulate unpleasantly smelling gases from the drain. The baffle extends down from the roof of the passage into the continuous body of water, to below the fill level, thereby forming a water trap separating the gas space from the toilet bowl. Accordingly, provided that the passage has been sealed correctly to the drain outlet, gases from the drain cannot penetrate the surrounding atmosphere except by dissolving in the body of water and evaporating from within the toilet bowl.

When the flush button is depressed by a user, the flush rod is depressed and so is the hinged link until a force is exerted on the rotatable mount, causing the rotatable mount to rotate against the biasing spring. Rotation of the rotatable mount drives rotation of the crank away from the flap, pulling the connecting arm and the flap with it towards the recessed base of the passage, the flap pivoting around its hinge from the raised position to the lowered position, as illustrated in Figure 5. As a result, the continuous body of water drains through the passage, over the gate and out of the drain outlet. As the water flows towards the drain outlet, it flows below the height of the rotatable mount. The aperture under the baffle is dimensioned to provide sufficient size for solid waste to flow out of the toilet bowl and along the passage.

The downward motion of the flush rod simultaneously causes the toggle hook to pull down on the spigot, thereby pulling the first end of the lever arm down, pressing down on the float through the rod, displacing water from within the overflow chamber through the overflow channel and into the passage. Additionally, as the first end of the lever arm is pulled down, the second end of said lever arm is pushed up, opening the fill valve and allowing water to flow from the mains water supply, through the valve, to the spray ring. Water flows from the spray ring down around the periphery of the toilet bowl. Because the flap and baffle arrangement does not require water within a fixed water trap to be displaced, the water which flows down from the spray ring is not required to provide fluid kinetic energy. Water is required only to clean and refill the toilet bowl.

As the flush rod continues downwards, the toggle hook goes over centre and disengages from the spigot, allowing movement of the lever arm to be disengaged from movement of the flush rod.

When the flush button is released by the user, the action of the biasing spring causes the rotatable mount to rotate back to its default position, simultaneously causing the flush rod and the flush button to be raised back to their starting positions and the crank to rotate towards the flap, thereby driving pivoting of the flap about its hinge from the lowered position to the raised position. Water continues to flow into the toilet bowl through the apertures in the spray ring and the water level within the bowl and the passage now rises. Once the water level within the bowl and passage exceeds the water fill level defined by the overflow port, water flows from the passage, through the overflow port, through the overflow channel, and into the overflow chamber. The float rises in response to the increased water level in the overflow chamber, raising the first end of the lever arm and pushing down the second end of the lever arm to cut off the water flow to the spray ring. The volume of the overflow chamber is small in comparison to the volume of the toilet bowl and passage, and the volume of the float within the overflow chamber is substantial relative to said volume of the overflow chamber, such that a small change in the height of the water level within the toilet bowl and passage above the water fill level leads to a rapid increase in height of the water level within the overflow chamber. The float therefore responds quickly to changes in the passage water level and is able to cut off the water flow to the spray ring with only a minimal delay. Very little water is wasted in refilling the toilet bowl. The toilet is now ready for the next flush.

The toilet can be fitted to a conventional toilet fitting in which a drain pipe is provided extending rearwards from the toilet, below the toilet bowl and above floor level. The flush button and general configuration of the toilet is similar to conventional toilets which facilitates acceptance of the product by the general public.

One skilled in the art will appreciate that the flush mechanism, which is operable to open the gate for a period of time and to introduce water to the toilet bowl for a longer period of time may be replaced by alternative mechanisms which have similar effects, including purely hydraulic mechanisms and/or electrical or electronic mechanisms.

In alternative embodiments, the flap may be replaced by an alternative gate, such as a gate having two or more parts; one or more gate portions with vertical hinges; a gate comprising a wall which is raised or lowered to allow water to flow to the drain outlet in the open position; and so forth. Where the gate is a flap with a hinge along the base, the hinge may be located underneath the divider or even within the toilet bowl.

Although the divider has been illustrated as a fixed, integral part of a toilet bowl, the divider may take the form of a demountable baffle, a moveable baffle which is, for example, raised as part of the flush mechanism and/or a baffle which is recessed within the passage. The divider may also comprises an elongate passage portion.

The rotatable mount may be provided at alternative positions within the passage, for example within the ceiling of the passage, so long as said rotatable mount is provided above a standing water level in the passage and/or a water flow lever within said passage.

The crank may take different shapes. For example, the crank may comprise a linear rod which extends across the passage, the rod having a crank arm protruding therefrom at right angles to the axis of rotation. Alternatively, in embodiments where the passage walls are flat, the crank may take a rectilinear shape to conform to the shape of the passage.

The crank may be attached directly to the flap support. For example, the crank may be slidably attached to the flap support such that the point of connection between the crank and the flap support moves linearly along the flap support as the flap is moved between the raised and lowered positions by rotation of the crank. Alternatively, the crank may attached directly to the flap.

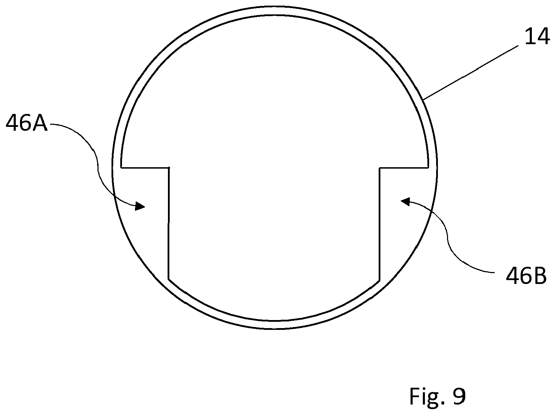

The interior of the second pipe portion 14 may narrow downstream of the flap. For example, Figure 9 shows a cross-section through the second pipe portion 14. The lower half of the interior walls of the second pipe portion 14 are provided with baffles 46Aand 46B which extend along a portion of the length of the second pipe portion 14 and which reduce the space available for water and waste matter in the second pipe portion. This typically increases the depth of water in the second pipe portion during flushing, which increases the buoyancy of solid waste matter and assists the flotation of the solid waste matter as it travels with the water towards the drain outlet. Solid waste matter is therefore less likely to drag along or adhere to the base of the passage when the toilet is flushed.

A pipe interrupter valve may be provided between the fill valve and the spray ring to prevent siphonage and/or backflow. The pipe interrupter valve may create an open vent to the surrounding atmosphere.

Further modifications and variations may be made within the scope of the invention herein disclosed.

For example, the apparatus may comprise an alternative flush control mechanism. The flush button may be operably connected to the rotatable crank mount by way of a first cable. The flush button may also be operably connected to the lever arm by way of a second cable (replacing the toggle hook). The second cable may be configured to provide some lost motion such that, when the flush button is released, the float is free to rise with increasing water level in the overflow chamber, thereby causing the lever arm to which it is mechanically linked to pivot and thus shut off the flow of water into the toilet.

The narrowing baffles 46A and 46B may be extended vertically to cover a greater proportion of the interior walls of the second pipe portion.

## Claims

1. A toilet comprising a toilet bowl, a passage which extends from the base of the toilet bowl to a drain outlet, a gate, an overflow port, and a flush mechanism comprising a valve operable to regulate a flow of water into the toilet bowl, the gate having an open position which allows water within the toilet bowl to flow out of the drain outlet by way of the passage and a closed position in which the gate retains a continuous body of water within the toilet bowl and a portion of the passage up to a fill level, wherein, when the gate is in the closed position, water from the continuous body of water which is above the fill level flows through the overflow port, the flush mechanism being operable to close the valve responsive to water overflow through said overflow port.

2. The toilet according to claim 1, wherein the gate defines at least a portion of the overflow port.

3. The toilet according to claim 2, wherein the gate comprises a unitary flexible component, a portion of said unitary flexible component defining said at least a portion of the overflow port.

4. The toilet according to any one preceding claim, wherein the overflow port defines the fill level.

5. The toilet according to any one preceding claim, wherein the overflow port is provided within the passage.

6. The toilet according to any one preceding claim, wherein an overflow channel extends from the overflow port to an overflow chamber such that, when the gate is in the closed position, water from the continuous body of water which is above the fill level flows through the overflow port, through the overflow channel and into the overflow chamber, optionally wherein the flush mechanism is operable to close the valve responsive to detection of water overflow through the overflow channel.

7. The toilet according to claim 6, wherein the flush mechanism is operable to close the valve responsive to detection that a level of water within the overflow chamber has increased or has exceeded a threshold.

8. The toilet according to claim 6 or claim 7 further comprising a level sensor operable to detect the level of water within the overflow chamber.

9. The toilet according to claim 8, wherein the level sensor comprises a float provided within the overflow chamber, optionally wherein the flush mechanism further comprises a lever arm having opposite first and second ends with a pivot therebetween, the first end being coupled to the float within the overflow chamber and the second end being coupled to the valve operable to regulate the flow of water into the toilet bowl.

10. The toilet according to any one preceding claim, wherein the flush mechanism comprises a manually operable flush control operable to cause movement of the gate from the closed position to the open position, optionally wherein activation of said manually operable flush control also causes displacement of water out of the overflow chamber.

11. The toilet according to claim 10, dependent on claim 9, wherein said manually operable flush control is coupled to the float by way of float depression means, wherein depression of the float by said float depression means on activation of said manually operable flush control causes displacement of water from the overflow chamber through the overflow channel into the passage.

12. A kit of parts for assembling the toilet according to any one preceding claim, the kit of parts comprising a toilet bowl module, an adaptor pipe module and a gate, the toilet bowl module comprising a toilet bowl and a passage which extends from the base of the toilet bowl to an outlet located to the rear of the toilet bowl module, the adaptor pipe module comprising a passage extending between a front inlet and a rear outlet, the adaptor pipe module having the gate attached thereto or having a fitting for receiving the gate, the front inlet of the adaptor pipe module and the outlet of the toilet bowl module being adapted to join in an abutting relationship, either or both of the front inlet of the adaptor pipe module and the outlet of the toilet bowl module comprising a recess for receiving and sealedly retaining the gate, wherein the adaptor pipe module further comprises an overflow channel extending from an overflow port in an interior wall of the passage which extended between the front inlet and the rear outlet.

13. A toilet comprising a toilet bowl, a passage which extends from the base of the toilet bowl to a drain outlet, a gate, and a gate actuator, the gate having an open position which allows water within the toilet bowl to flow downstream towards the drain outlet by way of the passage and a closed position in which the gate retains a continuous body of water upstream of the gate within the toilet bowl and a portion of the passage up to a fill level, wherein the gate actuator is operable to move the gate between the open and closed positions by rotation of a crank rotatably mounted on an interior wall of the passage above a standing water level in the passage downstream of the gate.

14. A kit of parts for assembling the toilet according to claim 13, the kit of parts comprising a toilet bowl module, an adaptor pipe module and a gate, the toilet bowl module comprising a toilet bowl and a passage which extends from the base of the toilet bowl to an outlet located to the rear of the toilet bowl module, the adaptor pipe module comprising a passage extending between a front inlet and a rear outlet, the adaptor pipe module having the gate attached thereto or having a fitting for receiving the gate, the front inlet of the adaptor pipe module and the outlet of the toilet bowl module being adapted to join in an abutting relationship, either or both of the front inlet of the adaptor pipe module and the outlet of the toilet bowl module comprising a recess for receiving and sealedly retaining the gate, wherein the adaptor pipe module further comprises a gate actuator rotatably mounted on an interior wall of the passage rearwards of the gate or rearwards of the fitting for receiving the gate.

15. A toilet comprising a toilet bowl, a passage which extends from the base of the toilet bowl to a drain outlet, a gate, an overflow port, and a flush mechanism comprising a valve operable to regulate a flow of water into the toilet bowl, the gate having an open position which allows water within the toilet bowl to flow out of the drain outlet by way of the passage and a closed position in which the gate retains a continuous body of water within the toilet bowl and a portion of the passage up to a fill level, wherein an interior breadth of a downstream portion of the passage, closer to the drain outlet, is less than the interior breadth of an upstream portion of the passage, closer to the toilet bowl.
